# EUROPEAN PATENT SPECIFICATION

(11) **EP 1 120 002 B1**
(45) Date of publication and mention of the grant of the patent: **12.09.2007**
(21) Application number: 99970251.7
(22) Date of filing: 01.10.1999
(51) Int. Cl.: H04Q 7/38

(54) **EXTENDED FUNCTIONALITY IN MOBILE TELEPHONE NETWORK**
ERWEITERTE FUNKIONALITÄT IN EINEM MOBILEN TELEFONNETZ
RESEAU TELEPHONIQUE MOBILE A FONCTIONNALITE ETENDUE

(30) Priority: 07.10.1998 SE 9803412
(43) Date of publication of application: 01.08.2001
(73) Proprietor: Telia AB (publ), 123 86 Farsta (SE)
(72) Inventor: LJUNGGREN, Tommy, S-129 44 Hägersten (SE)
(74) Representative: Hopfgarten, Nils
(86) International application number: PCT/SE1999/001750
(87) International publication number: WO 2000/021323

(56) References cited:
- WO-A2-98/36607
- US-A- 5 697 055
- 1997 IEEE 6th International Conference on Universal Personal Communications Record, 12-16 Oct. 1997, Magnusson S. et. al., "Dynamic neighbor cell list planning in a microcellular network", p. 223-227, see specially Chapter IV, XP002931513

## Description

### TECHNICAL FIELD

In a cellular mobile telecommunication system there is possibility to change base for call in progress from a first mobile telephone network to a second mobile telephone network. The invention deals with a method to collect information which is utilised to automatically set parameters of the first mobile telephone network, the delivering network, which is condition for that change of base shall be possible to perform. Said information is collected without aid from the network operator in the second mobile telephone network, according to the preamble of claim 1.

### PRIOR ART

WO 98/36607 describes a method and an apparatus for performing inter-system hard handover between telecommunications systems. To prepare an inter-system handover between an originating and a destination mobile telephone network, local and neighbour search lists are provided and information is collected by measurements within the radio coverage area of the originating telephone network.

US 5 697 055 discloses handover between different cellular communications system, wherein, before change of base has been initiated, signal strength according to an extended neighbour cell list, including base stations in a second mobile telephone network, is measured.

Previous solutions to set parameters in the delivering network are also known implying active participation from concerned network operators.

Document GB 2 310 111 shows a procedure for synchronisation between different base stations, also between such which belong to different networks. The synchronisation is arranged by means of a device which transmits reference pulses, which are adjusted in accordance with the transmission delay.

Document EP 725 552 shows a method for transmission of parameters from a telecommunication system for wireless telephony preferably a DECT-system, to a cellular mobile telephone system. The parameters are transferred in given transfer zones between the systems.

Neither of the documents includes explicitly, or in combination, the suggested technology.

### TECHNICAL PROBLEM

A mobile telephone is adapted to be used within a mobile telephone network, PLMN. A PLMN covers a geographical area and is run by a network operator. The geographical area does not normally extend beyond the borders of a country, but the network also can have a more limited range depending on that a network operator can have been given concession to carry on mobile telephony within only a part of a country. Especially during a construction period the geographical area may also be limited due to that the network operator's establishment does not cover the whole area where he/she has possibility to run mobile telephony. Concession to run mobile telephony can be given to more than one network operator, at which it within a geographical area may exist competition between a number of network operators.

Mobile telephones in a cellular mobile telephone network are connected to a base station which belongs to the network operator of the network. A base station has a radio coverage area which is limited by the range of the base station. Outside this radio coverage area other base stations have a radio coverage area, so that in the ideal case the whole surface is covered by the radio coverage areas of different base stations. At transit between the radio coverage areas of base stations, change of base has to be made to another base station which belongs to the same network operator, so that the mobile telephone shall be able to maintain the contact with the mobile telephone network. Such change of base can also be made during call in progress, and then it is normally made without the conversing parties noticing that change of a base has been made.

In for instance the mobile telephone standard for GSM, there also is the possibility to effect change of base between different mobile telephone networks, which can be run by different network operators, during and between calls. This can be made both within a nation and across national borders. Change of base then is made from a base station which belongs to a first mobile telephone network where the call is established, after this called "delivering network", to a base station which belongs to a second mobile telephone network, after this called "receiving network".

To make this possible during a call is, however, required that the delivering network has knowledge of detailed information about the base stations in the receiving network. In mobile telephone systems with network controlled change of base, for instance in GSM, the mobile telephone network must have knowledge of signal levels from base stations in the neighbourhood of the mobile telephone, measured from the mobile telephone. When measured signal level shows that connection to another base station is advantageous, change of base is initiated. In order to get basic data for the mobile telephone network for decision of change of base, each mobile telephone measures signal levels of neighbouring base stations. This in its turn implies that the base station transmits signals to the mobile telephones and transmits information about the base stations which shall be measured, and that the result from the measurement then is transmitted to the base station. This information is transmitted to the mobile telephones in form of a so called "list of neighbours". In order to create this list of neighbours, the mobile telephone network must have access to information about the base stations. Within each mobile telephone network, the network operator sees to it that the mobile telephone network is loaded with necessary information about the base stations.

If change of base shall be made to another mobile telephone network, the base station also must be provided with the necessary information regarding the other network. Today this is achieved by the two involved network operators exchanging information with each other manually, or via some type of automatic connection. As soon as a small change in any of the networks, the co-operating network operator, however, must immediately be informed. In other case there is no possibility to make change of base during a call in progress. This implies that the delivering network must have access to this information immediately when the change is made, to make it possible to maintain the service level aimed at. Such an arrangement, which implies an immediate exchange of information between independent organisations, is very difficult to maintain. The close co-operation required to make it possible for all parties to continously have access to right information is further made difficult if the network operators are competing.

### TECHNICAL SOLUTION

The present invention presents a solution to this problem by a method according to claim 1.

The here described technical solution is based on a cellular mobile telephone network, for instance a GSM-network.

In order to make possible change of base to other mobile telephone networks during call in progress, information must be collected for setting of parameters. According to the invention, the necessary basic data are collected from the receiving network by signal measuring. The subsequent processing of the information intends to decide which base stations in the receiving network which are so located that it will be possible to make a change of base to them. This means in most cases which base stations which, in the measured area, have sufficient signal strength to constitute candidate for change of base from base station in the delivering network.

A particularly advantageous way of collecting the above-mentioned necessary data for change of base station is obtained by a method of the kind defined in the introductory portion of the description and having the characterizing features of claim 1.

The method is used in mobile telephone networks or similar systems where change of base can be made between base stations belonging to two different networks. This is, for instance, usable in, and between, all networks based on the GSM-standard, i.e. GSM 900/1800/1900 and GSM-R. Change of base between different networks and systems are also expected to be possible in future systems, such as UMTS. The method can be used both between networks within a nation and between networks which are in different nations.

### ADVANTAGES

A mobile telephone network is built to cover a country or a part of a country. If a mobile telephone user passes the border of the area which is covered by the mobile telephone network to which the telephone is connected, call in progress is normally disconnected. Through co-operation between network operators there are functions and routines so that the mobile telephone can establish contact with the new mobile telephone network after such a border having been passed. After that the user can use the telephone for new calls. By an extended bilateral co-operation between two network operators there will be possibilities to exchange information so that change of base during call in progress also can be made at change of base to base station in another mobile telephone network. A network operator in a telecommunication network can, at need, for instance effect a change of base of calls between networks, by the suggested method collect necessary parameter data. The method makes it possible for a network operator in a network to collect these parameter data without assistance from the party which represents the other network.

A network operator in a telecommunication network can, at need, for instance effect a change of base of calls between networks, by the suggested method collect necessary parameter data. The method makes it possible for a network operator in a network to collect these parameter data without assistance from the party which represents the other network.

The suggested method can be used at crossing of a border between countries. In that way a call in progress can proceed apart from that the border has been passed.

When a network operator has concession for mobile telephony within only a part of a country, or the network has been built out only within a smaller area, call in progress can, according to the described method, proceed without the user being disturbed when a limit of the network operator's area is passed.

At such disturbances, or at so heavy traffic load that the network operator has no resources to manage all traffic which is required within his/her radio coverage area, he/she in the same way has possibility to utilise other network operators within the same geographical area.
Established mobile telephone calls then can be transferred to another network operator and by that good quality and access in the network can be maintained.

### LIST OF FIGURES

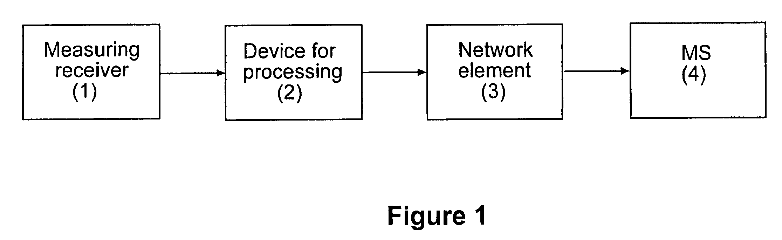

Figure 1 shows collection of data by placed measuring receiver.

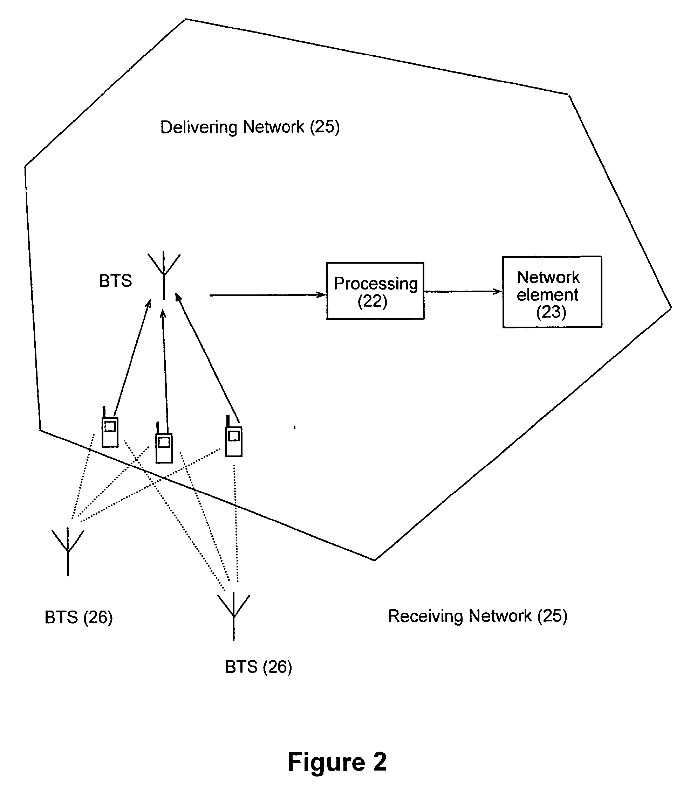

Figure 2 shows collection of data by means of existing mobile telephones.

### EXPLANATION OF TERMS

| | |
|---|---|
| Delivering network | Mobile telephone network where the call is established and from which the change of base is made. |
| | |
| Change of base | Handover. (Switching to other BTS). |
| | |
| BSC | Base Station Controller (Control unit for base stations). |
| | |
| BTS | Base station in cellular mobile telephone network. |
| | |
| GSM | Global System for Mobile communication. |
| | |
| Receiving network | Mobile telephone network to which change of base is made. |
| | |
| MS | Mobile Telephone. |
| | |
| NE | Network Element; connection controlling unit in telecommunication network, for instance BTS, BSC. |
| | |
| PLMN | Mobile telephone network which is managed by a network operator. |
| | |
| SMS | Short Message Service (Short text message; service in GSM for packet switched data). |

### DETAILED DESCRIPTION

The description below refers to the figures of the enclosed drawings.

The invention is based on that within a first mobile telephone network, the delivering network, measurements collection and processing of information is made which relates to a second mobile telephone network, the receiving network.

In the area where the first mobile telephone network operator wants that change of base shall be possible to make, in addition to base stations in the own mobile telephone network also to base stations in a neighbouring mobile telephone network, measuring receivers are arranged for collection of information. Such an area can be a border area of a mobile telephone network, which is run by a second mobile telephone network operator, and where the first mobile telephone operator's network does not have radio coverage. The area also can have coverage by the first mobile telephone network operator's network, but he/she may need to have the possibility to in certain situations transfer established calls to another operator.

The processing of information intends to decide which base stations in the receiving network which it can be suitable to change base to. This means in most cases which base stations which, in the measured area, have sufficient signal strength to constitute candidate for change of base from respective base station in the delivering network.

When a list has been made with information about all base stations which may be subject to change of base, the information is transformed into parameter setting commands which are fed into the network elements of the network.

In for instance GSM each connected mobile telephone is arranged to make measurements of signal strength etc for neighbouring base stations. The result of the measurements are transmitted from the mobile telephone to the base station to which the mobile station is connected, in order to later be utilised by BSC for analysis and decision of change of base. Information about base stations, or "neighbouring cells", for which the mobile telephone shall make such measurements is transferred to the mobile telephone in a "list of neighbouring cells".

According to the here described invention this list of neighbouring cells is extended with neighbouring cells which are located within another mobile telephone network.

When a mobile telephone makes measurements about neighbouring cells, this information will apply for both neighbouring cells within the own network and neighbouring cells within the other network. By that there will be a possibility that BSC decides that the mobile telephone shall make a change of base to base station within another mobile telephone network. By this arrangement a better service consequently will be offered the network operator's customers.

In the area where a first mobile telephone network operator wants that change of base shall be possible to make, in addition to base stations in the own mobile telephone network also to base stations in a second mobile telephone network, specific measuring receivers (1) are placed. The measuring receivers are arranged to measure necessary information about the receiving network, for instance cell identity and used frequency. If the need for such measuring is limited to a few smaller areas, such an arrangement is favourable. It can also be suitable to introduce the receivers with, or place them together with, the base stations in a standardised arrangement.

The measuring receivers are placed in that part of a first network operator's radio coverage area where a change of base to a PLMN, which is managed by another network operator, can be of interest. This can be at the periphery of the radio coverage area, in order to in that way make possible change of base to base station within a PLMN with a radio coverage area outside that of the first network operator's. It also can be favourable to place measuring receivers within the first network operator's radio coverage area in order to create a possibility to, for instance at lack of resources, make change of base to a base station within another PLMN but in the same geographical area.

The placed measuring receivers transmit the measured information to a device (2) for processing and generation of commands. The result of the processing then is transferred to the network element in question (3) such as BSC and base stations so that information about base stations in the neighbouring network can be entered in the list of neighbouring cells which is transmitted to connected mobile telephones. By that BSC will have access to information which is needed as basic data for decision and initiation of measures for change of base.

The measuring receivers can for instance be placed together with a base station, or be built in as a part of a base station, to from this place make necessary measuring. As an alternative, the measuring receivers can be placed in other places within the radio coverage area of the base station.

According to an embodiment of the present invention all existing mobile telephones (21) connected to a first mobile telephone network, the delivering network (25), are used as measuring receivers. The mobile telephones are arranged to measure on one or more of the frequencies which have been allocated the second mobile telephone network, the receiving network (24). Necessary parameters are transferred to a device (22) for processing and generation of commands. The result is then transferred to network elements in question (23) and is utilised in the same way as has been described above.

Algorithm and processing procedure can be transmitted via data message to the mobile telephones, for instance as SMS-message in GSM-system. After that the mobile telephones are ready to serve as measuring receivers. This embodiment therefore does no require any change in existing equipment, neither in MS nor in BTS, but all changes can be made in software and procedures. This embodiment, however, requires a more complicated data processing than the arrangement described above.

The described simpler introduction according to the present embodiment without installation in plants or other existing equipment also means that one rapidly will have radio coverage of a larger geographical measuring area.

The invention is not limited to the above presented embodiment, but can in addition be subject to modifications within the frame of the following claims.

## Claims

1. A method to, in a first cellular mobile telephone network, collect information, for instance cell identity and frequency, about cells in a second cellular mobile telephone network so that a list over neighbouring cells of base stations for which measurements shall be made by the mobile telephone, and which are required for decision of change of base, is created and transmitted to mobile telephones in the first mobile telephone network, wherein said information is collected by measuring by means of measuring devices, included in said mobile telephones, which are located within the radio coverage area of base stations within the first mobile telephone network, and said information is collected by the network operator who manages the first mobile telephone network, without participation from the network operator who manages the second mobile telephone network, **characterised in that** all existing mobile telephones (21) connected to the first mobile telephone network (25) are used to collect said information regarding cells in the second mobile telephone network (24), and **in that** said information is transferred to a device (2, 22) of said first network for processing and generation of commands with subsequent transfer of results to current network elements (3, 23), such as BSC and base stations, of said first network.

2. A method as claimed in claim 1,
**characterised in that** the cellular networks are GSM networks.

3. A method as claimed in claim 1 or 2,
**characterised in that** change of base from a base station in the first mobile telephone network to a base station in the second mobile telephone network is made possible during call in progress.

4. A method as claimed in any of the previous claims,
**characterised in that** said collected information constitutes basic data for extension of the list of neighbouring cells which is transmitted to mobile telephones which are connected to the first mobile telephone network and which have neighbouring cells located within the second mobile telephone network.

5. A method as claimed in claim 1,
**characterised in that** said mobile telephones are arranged to measure on one or more of the frequencies which have been allocated to the second mobile telephone network (24).

6. A method as claimed in any one of the preceding claims, **characterised in that** algorithm and processing procedures are transferred via data message to the mobile telephones, which after that operate as measuring receivers.

7. A method as claimed in any of the previous claims,
**characterised in that** change of base from one base station in the first mobile telephone network to a base station in the second mobile telephone network can be made at such distorsion, or at such heavy traffic load, that the resources to manage the traffic which is required is not momentary sufficient within the first mobile telephone network.

## Patentansprüche

1. Verfahren zum Sammeln von Information, zum Beispiel Zellenidentität und Frequenz, in einem ersten zellularen mobilen Telefonnetz über Zellen in einem zweiten zellularen mobilen Telefonnetz, so dass eine Liste über benachbarte Zellen von Basisstationen, für die Messungen durch das mobile Telefon durchgerührt werden sollen und die für die Entscheidung des Welchsels der Basis erforderlich sind, geschaffen wird und zu mobilen Telefonen in dem ersten mobilen Telefonnetz gesendet wird, wobei die Information durch Messen mit Hilfe von Messeinrichtungen gesammelt wird, die in den mobilen Telefonen enthalten sind, die innerhalb des Funkabdeckungsbereichs von Basisstationen innerhalb des ersten mobilen Telefonnetzes angeordnet sind, und diese Information durch den Netzbetreiber, der das erste mobile Telefonnetz verwaltet, ohne Teilnahme des Netzbetreibers gesammelt wird, der das zweite mobile Telefonnetz verwaltet, **dadurch gekennzeichnet, dass** alle existierenden mobilen Telefone (21), die mit dem ersten mobilen Telefonnetz (25) verbunden sind, benutzt werden, die Information bezüglich Zellen im zweiten mobilen Telefonnetz (24) zu sammeln, und dass die Information zu einer Einrichtung (2, 22) des ersten Netzes für Verarbeitung und Erzeugung von Anweisungen mit nachfolgender Übertragung von Ergebnissen zu gegenwärtigen Netzelementen (3, 23), wie zum Beispiel BSC und Basisstationen, des ersten Netzes übertragen wird.

2. Verfahren nach Anspruch 1, **dadurch gekennzeichnet, dass** die zellularen Netze GSM-Netze sind.

3. Verfahren nach Anspruch 1 oder 2, **dadurch gekennzeichnet, dass** Wechsel der Basis von einer Basisstation in dem ersten mobilen Telefonnetz zu einer Basisstation in dem zweiten mobilen Telefonnetz während eines laufenden Rufs ermöglicht wird.

4. Verfahren nach einem der vorangehenden Ansprüche, **dadurch gekennzeichnet, dass** die gesammelte Information grundlegende Daten für die Erweiterung der Liste von benachbarten Zellen bildet, die zu mobilen Telefonen gesendet wird, die mit dem ersten mobilen Telefonnetz verbunden sind und die benachbarte Zellen haben, die innerhalb des zweiten mobilen Telefonnetzes angeordnet sind.

5. Verfahren nach Anspruch 1, **dadurch gekennzeichnet, dass** die mobilen Telefone dazu ausgebildet sind, eine oder mehrere der Frequenzen zu messen, die dem zweiten mobilen Telefonnetz (24) zugeordnet sind.

6. Verfahren nach einem der vorangehenden Ansprüche, **dadurch gekennzeichnet, dass** Algorithmus und Verarbeitungsprozeduren über Datenmeldung zu den mobilen Telefonen übertragen werden, die danach als Messempfänger arbeiten.

7. Verfahren nach einem der vorangehenden Ansprüche, **dadurch gekennzeichnet, dass** Wechsel der Basis von einer Basistation im ersten mobilen Telefonnetz zu einer Basisstation im zweiten mobilen Telefonnetz bei einer solchen Verzerrung oder Störung oder bei so starker Verkehrslast vorgenommen werden kann, dass die Resourcen, den Verkehr zu verwalten, der erfordert wird, momentan innerhalb des ersten mobilen Telefonnetzes nicht ausreichend sind.

## Revendications

1. Procédé de collecte, dans un premier réseau téléphonique cellulaire mobile, d'informations, par exemple d'une identité et d'une fréquence de cellule, relatives à des cellules dans un deuxième réseau téléphonique cellulaire mobile de sorte qu'une liste relative aux cellules voisines de stations de base pour lesquelles des mesures doivent être effectuées par le téléphone mobile, et qui sont nécessaires pour une décision de changement de base, est créée et transmise aux téléphones mobiles dans le premier réseau téléphonique mobile, dans lequel les dites informations sont collectées par mesure au moyen de dispositifs de mesure, inclus dans les dits téléphones mobiles, qui sont situés dans la zone de couverture radio de stations de base à l'intérieur du premier réseau téléphonique mobile, et les dites informations sont collectées par l'opérateur de réseau qui gère le premier réseau téléphonique mobile, sans participation de l'opérateur de réseau qui gère le deuxième réseau téléphonique mobile, **caractérisé en ce que** tous les téléphones mobiles existants (21) connectés au premier réseau téléphonique mobile (25) sont utilisés pour collecter les dites informations concernant des cellules dans le deuxième réseau téléphonique mobile (24), et **en ce que** les dites informations sont transférées à un dispositif (2, 22) du dit premier réseau pour traitement et génération d'instructions avec transfert subséquent des résultats à des éléments de réseau courants (3, 23), tels que des BSC et des stations de base, du dit premier réseau.

2. Procédé selon la revendication 1, **caractérisé en ce que** les réseaux cellulaires sont des réseaux GSM.

3. Procédé selon la revendication 1 ou 2, **caractérisé en ce qu'**un changement de base, d'une station de base dans le premier réseau téléphonique mobile à une station de base dans le deuxième réseau téléphonique, est permise pendant un appel en cours.

4. Procédé selon une quelconque des revendications précédentes, **caractérisé en ce que** les dites informations collectées constituent des données de base pour l'extension de la liste de cellules voisines qui est transmise aux téléphones mobiles qui sont connectés au premier réseau téléphonique mobile et qui ont des cellules voisines situées dans le deuxième réseau téléphonique mobile.

5. Procédé selon la revendication 1, **caractérisé en ce que** les dits téléphones mobiles sont agencés pour une mesure sur une ou plusieurs des fréquences qui ont été attribuées au deuxième réseau téléphonique mobile (24).

6. Procédé selon une quelconque des revendications précédentes, **caractérisé en ce qu'**un algorithme et des procédures de traitement sont transférés via un message de données aux téléphones mobiles, qui fonctionnent ensuite comme des récepteurs de mesure.

7. Procédé selon une quelconque des revendications précédentes, **caractérisé en ce qu'**un changement de base, d'une station de base dans le premier réseau téléphonique mobile à une station de base dans le deuxième réseau téléphonique mobile, peut être effectué à une distorsion, ou à une forte charge de trafic, telle que les ressources pour gérer le trafic qui sont requises ne sont pas momentanément suffisantes à l'intérieur du premier réseau téléphonique mobile.
